# DEMANDE DE BREVET EUROPEEN

(11) **EP 4 297 409 A1**
(43) Date de publication de la demande: **27.12.2023**
(21) Numéro de dépôt: 23179614.5
(22) Date de dépôt: 15.06.2023
(51) Int. Cl.: H04N 21/40, H04L 65/756, H04L 65/80

(54) **PROCÉDÉ DE GESTION DE LA LECTURE D'UN CONTENU MULTIMÉDIA.**

(30) Priorité: 24.06.2022 FR 2206324
(71) Demandeur: Orange, 92130 Issy-les-Moulineaux (FR)
(72) Inventeur: RIVOALEN, Mathieu, 92326 Châtillon (FR); MARCHAND, Hervé, 92326 Chatillon (FR)

(57) **Abrégé**

L'invention concerne un procédé de gestion de la lecture d'un contenu multimédia par un dispositif de lecture (STB) équipé d'un processeur et apte à restituer le contenu, caractérisé en ce que le dispositif de lecture comprend plusieurs lecteurs (LCT1/LCT2) disponibles à la sélection aptes à lire un même contenu, et en ce qu'il comprend les étapes suivantes :
b. Une étape de sélection d'un lecteur parmi les lecteurs sélectionnables (LCT1/LCT2) ;
c. Une étape de lecture du contenu avec le lecteur sélectionné.

## Description

### Domaine technique

Le domaine de l'invention est celui des contenus multimédias numériques, à savoir les contenus audio et/ou vidéo numériques, également appelés contenus audiovisuels.

L'invention se rapporte tout particulièrement à un procédé de gestion de lecture d'un contenu multimédia.

Un dispositif de lecture vise en particulier tout dispositifs aptes à recevoir des flux multimédias sous forme de segments par exemple un décodeur, un téléphone mobile, une tablette, etc., et à lire les contenus reçus.

Un contenu est par exemple un contenu diffusé en temps réel appelé aussi contenu « live » par l'homme du métier, un contenu de télévision à la demande, un contenu de vidéo à la demande, etc.

### Etat de la technique

Il existe aujourd'hui de nombreux dispositifs de lecture de contenus audiovisuels permettant à un utilisateur d'accéder à toutes sortes de contenus multimédias (vidéo à la demande (VOD), télévision à la demande (TVOD), etc.). Les dispositifs de lecture sont adaptés pour recevoir un contenu numérique sous forme de données multimédia et pour en faire une restitution sur un dispositif de restitution.

Il existe plusieurs types de lecteurs de contenus offrant chacun plus ou moins de commandes (play, pause, retour rapide, avance rapide, etc.) présentées sous forme de menu. Du fait de la diversité des commandes offertes, un lecteur de contenus consomme plus ou moins de ressource processeur (ou ressource CPU).

En fonction du type de contenu à lire et du type de lecteur, il arrive que la consommation en processeur soit excessive. Par exemple, si le lecteur comporte un menu avec beaucoup de fonctions telles qu'une fonction avance/retour rapide, une fonction pause, une restitution d'une imagette associée à un instant courant de lecture, etc., cela peut engendrer une surcharge de la ressource processeur CPU ; et si en plus le flux vidéo est restitué en arrière-plan par rapport au menu, une telle configuration entraîne une charge CPU qui avoisine parfois 90%. Il résulte de cette surconsommation des problèmes de restitution du contenu (pixellisations, ralentissements) voire une coupure de la restitution ce qui n'est pas du tout acceptable en termes de qualité de services.

L'invention vient améliorer la situation.

### L'invention

A cet effet, selon un aspect fonctionnel, l'invention a pour objet un procédé de gestion de la lecture d'un contenu multimédia par un dispositif de lecture équipé d'un processeur et apte à restituer le contenu, caractérisé en ce que le dispositif de lecture comprend plusieurs lecteurs disponibles à la sélection aptes à lire un même contenu, et en ce qu'il comprend les étapes suivantes :
b. Une étape de sélection d'un lecteur parmi les lecteurs sélectionnables ;
c. Une étape de lecture du contenu avec le lecteur sélectionné.

Selon l'invention, plusieurs lecteurs sont disponibles à sélection. Un lecteur peut donc être choisi judicieusement dans l'ensemble des lecteurs disponibles. En d'autres mots, contrairement à l'état de la technique où le lecteur est choisi une fois pour toutes, le type de lecteur de contenus utilisé dans le dispositif de lecture varie dans le temps. Ce choix possible entre plusieurs lecteurs pour la lecture d'un contenu permet de maîtriser la consommation de la ressource processeur et donc d'éviter une surcharge de cette ressource.

Selon un premier mode de réalisation, la sélection se base sur un type de contenu à lire. Ce premier mode simple se contente d'identifier le type de contenu (contenu diffusé en temps réel, vidéo à la demande, etc.) et de sélectionner le contenu avec un lecteur adapté, par exemple un lecteur offrant des commandes adaptées au contenu à lire ; si le contenu est un contenu à la demande, le lecteur sera sélectionné parmi les lecteurs offrant par exemple une commande d'avance rapide ou de retour rapide dans le contenu.

Selon un deuxième mode de réalisation, qui pourra être mis en oeuvre alternativement ou cumulativement avec les précédents, le lecteur de contenu est sélectionné en fonction d'un contexte d'exécution lié à la lecture du contenu. Ce deuxième mode prend en compte un contexte d'exécution de la lecture qui s'ajoute à la lecture. Selon une variante du deuxième mode, le contexte d'exécution inclut un affichage d'un menu en complément du contenu en cours de restitution. Le menu se superpose à la restitution du contenu ; Une telle configuration consomme beaucoup de ressource processeur. Ayant plusieurs lecteurs à disposition, chacun consommant plus ou moins la ressource processeur, ce mode et la variante associée permet de diminuer la charge CPU.

Selon un troisième mode de réalisation, qui pourra être mis en oeuvre alternativement ou cumulativement avec les précédents, si plusieurs lecteurs sont adaptés à la lecture du contenu, le lecteur est sélectionné parmi les moins consommateurs en ressource processeur. Ce troisième mode vise à réduire la consommation de la ressource processeur pour qu'elle soit disponible pour des tâches informatiques autres que la lecture de contenus.

Selon un quatrième mode de réalisation, qui pourra être mis en oeuvre alternativement ou cumulativement avec les précédents, le contexte inclut une activation d'une fonction de lecture au cours de la lecture d'un contenu ; si le lecteur courant n'est pas adapté, le procédé comprend une sélection d'un autre lecteur. Ce quatrième mode vise un cas où, lors d'une lecture du contenu, une fonction de lecture est activée et qu'un lecteur autre que le lecteur courant est plus adapté à la lecture. Ce mode assure un choix optimal de lecteur même au cours de la lecture du contenu.

Selon un cinquième mode de réalisation, qui pourra être mis en oeuvre alternativement ou cumulativement avec les précédents, le contexte d'exécution est lié à la quantité d'utilisation de la ressource processeur ; le lecteur courant est remplacé par un autre lecteur si la quantité d'utilisation de la ressource processeur atteint une valeur fixée. Ce cinquième mode est intéressant en ce qu'il permet de maîtriser la consommation CPU en particulier lorsque le lecteur sélectionné est trop consommateur en CPU.

Selon un aspect matériel, l'invention se rapporte à une entité de gestion de gestion de la lecture d'un contenu multimédia par un dispositif de lecture équipé d'un processeur et apte à restituer le contenu, caractérisé en ce que le dispositif de lecture comprend plusieurs lecteurs disponibles à la sélection aptes à lire un même contenu, et en ce que le processeur réalise les étapes suivantes :
b. Une étape de sélection d'un lecteur parmi les lecteurs sélectionnables ;
c. Une étape de lecture du contenu avec le lecteur sélectionné.

Selon un autre aspect matériel, l'invention se rapporte à un décodeur comprenant une entité de gestion telle que définie ci-dessus.

Selon un autre aspect matériel, l'invention se rapporte à un programme d'ordinateur apte à être mis en oeuvre sur une entité telle que définie ci-dessus, le programme comprenant des instructions de code qui, lorsqu'il est exécuté par un processeur, réalise les étapes du procédé de sélection définies ci-dessus.

Enfin, selon un autre aspect matériel, l'invention se rapporte à un support de données sur lequel a été mémorisée au moins une série d'instructions de code de programme pour l'exécution d'un procédé de gestion tel que défini ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de contrôle d'affichage précité.

L'invention sera mieux comprise à la lecture de la description qui suit, donnée à titre d'exemple et faite en référence aux dessins annexés sur lesquels :
[Fig. 1] La figure 1 représente un système informatique sur lequel est illustré un exemple de réalisation de l'invention.
[Fig. 2] La figure 2 est un schéma synoptique simplifié de la structure matérielle du dispositif du dispositif de lecture
[Fig. 3] La figure 3 illustre un contenu comprenant des segmentés auxquels sont associés plusieurs débits d'encodage, respectivement.
[Fig. 4] La figure 4 illustre de restitution de menus associés à deux lecteurs distincts.
[Fig. 5] La figure 5 illustre un tableau de correspondance stocké dans une base de données permettant à l'entité de gestion de sélectionner un lecteur en fonction du contenu à lire et du contexte d'exécution.
[Fig. 6] La figure 6 illustre une évolution de la consommation de la ressource processeur lors de plusieurs phases de lecture.
[Fig. 7] La figure 7 illustre un mode de réalisation dans lequel l'état courant de d'utilisation de la ressource processeur est pris en compte pour mettre en oeuvre le procédé de gestion ou pas.

### Description détaillée d'un exemple de réalisation illustrant l'invention :

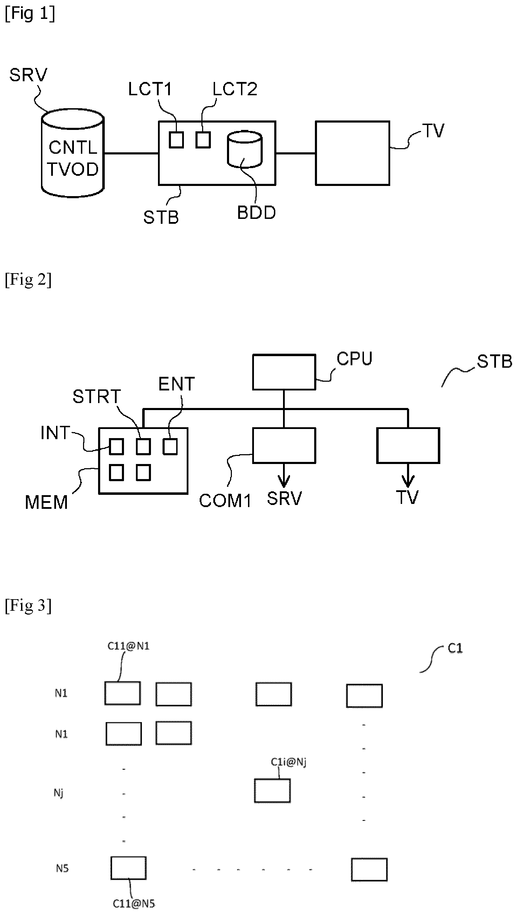

On présente désormais, en relation avec la figure 1, une architecture de téléchargement progressif basée sur l'utilisation du streaming adaptatif HAS selon un mode de réalisation de l'invention. Précisons à nouveau ici que l'invention ne se limite pas à la technologie HAS mais s'étend à toutes autres technologies de téléchargement de données.

Le système informatique SYS comprend un dispositif de lecture de flux multimédia STB, par exemple un décodeur connecté à un terminal de restitution TV tel qu'un dispositif de restitution. Précisons ici que le dispositif de lecture décodeur STB et le dispositif de restitution peuvent former qu'un seul et même équipement.

Dans notre exemple, le dispositif de lecture STB est connecté sur un port du dispositif de restitution TV. Dans notre exemple, le dispositif de lecture STB est situé dans un réseau local LAN piloté par une passerelle domestique (non représentée sur les figures). Le contexte du réseau local est donné à titre d'exemple et pourrait être transposé aisément à un réseau Internet de type « best effort », un réseau d'entreprise, etc.

La passerelle est apte à communiquer via un réseau de télécommunication tel qu'un réseau étendu WAN connu de l'homme du métier.

Un serveur de contenus numériques SRV se trouve dans notre exemple dans le réseau étendu WAN. Le serveur de contenus SRV reçoit par exemple des chaînes de contenus de télévision numérique CNTL, appelées contenus « Live » par l'homme du métier » en provenance d'un réseau de télévision diffusée (non représenté), et/ou des vidéos à la demande TVOD, et les met à disposition des terminaux clients, ici le dispositif de lecture STB.

Dans notre exemple, le dispositif de lecture décodeur STB est un client. Il est fréquent, dans ce contexte client-serveur, de recourir, pour échanger les données entre le terminal client STB et le serveur de contenus SRV, à une technique de téléchargement progressif adaptatif, en anglais « adaptive streaming », abrégé en HAS basée sur le protocole HTTP. Ce type de technique permet notamment d'offrir une bonne qualité de contenus à l'utilisateur en tenant compte des variations de bande passante qui peuvent se produire sur la liaison entre le terminal client STB et la passerelle de services, et/ou entre cette dernière et le serveur de contenus SRV.

La figure 2 représente une architecture d'un dispositif de lecture STB. Ce dispositif STB comprend, classiquement, des mémoires MEM associées à un processeur CPU. Les mémoires peuvent être de type ROM (de l'anglais « Read Only Memory ») ou RAM (de l'anglais « Random Access Memory ») ou encore Flash.

Le décodeur STB comprend une mémoire tampon appelée aussi antémémoire ou « buffer » par l'homme du métier.

Le décodeur STB peut transmettre un contenu à restituer au dispositif de restitution TV via un module de communication COM2. Ce module COM2 est par exemple une liaison HDMI.

Le décodeur STB communique avec la passerelle via un module Ethernet pour une communication locale avec fils ou via un module radio de type WiFi pour une communication locale sans fils avec la passerelle résidentielle GTW. Le module en question est référencé COM1 sur la figure 2.

Le décodeur STB comprend un module de téléchargement apte à gérer le téléchargement en mode adaptative streaming et donc apte à demander un téléchargement progressif de l'un des contenus à l'une des qualités proposées dans un fichier de description.

Le fichier de description peut être téléchargé et enregistré par exemple dans les mémoires MEM du décodeur STB ou se trouver hors du décodeur STB.

Le décodeur STB comprend en outre une entité de gestion ENT dont la fonction sera expliquée ci-après. Dans notre exemple, le module de téléchargement est inclus dans l'entité de gestion ENT.

Le décodeur STB peut aussi contenir d'autres modules comme un disque dur non représenté pour le stockage des segments vidéo, un module de contrôle d'accès aux contenus, un module de traitement des commandes reçues du smartphone, etc.

Classiquement, comme on le verra en référence à la figure 3, différentes qualités peuvent être encodées pour le même contenu d'une chaîne, correspondant par exemple à différents débits d'encodage. Plus généralement, on parlera de qualité pour se référer à une certaine résolution du contenu numérique (résolution spatiale, temporelle, niveau de qualité associée à la compression vidéo et/ou audio) avec un certain débit d'encodage. Chaque niveau de qualité est lui-même découpé sur le serveur de contenus en segments temporels (ou « segments » de contenu, en anglais « chunks », ces trois mots étant utilisés indifféremment dans l'ensemble de ce document).

La description de ces différentes qualités et de la segmentation temporelle associée, ainsi que les segments de contenu, est accessible par dispositif de lecture STB et mis à sa disposition via leurs adresses Internet. Les adresses Internet identifient des segments sur un réseau. Une telle adresse peut être un identifiant de type URI (sigle anglo saxon de « Universal Ressource Identifier ») connu de l'homme du métier. L'ensemble de ces paramètres (qualités, adresses des segments, etc.) est en général regroupé dans un fichier de paramètres, dit fichier de description ou « fichier de description MNF ». On notera que ce fichier de paramètres peut être un fichier informatique ou un ensemble d'informations descriptives du contenu, accessible à une certaine adresse.

Dans un contexte de téléchargement adaptatif progressif, le dispositif de lecture STB peut adapter ses requêtes pour recevoir et décoder le contenu demandé par l'utilisateur à la qualité qui lui correspond au mieux. Par exemple, si on considère un contenu disponible aux trois qualités suivantes 1 Mb/s (Mégabits par seconde), 1,95 Mb/s (N2), et 3 Mb/s (N3) ; Supposons aussi que le dispositif de lecture STB dispose d'une bande passante de 5 Mb/s sur la liaison LI1 (entre la passerelle et le serveur). Dans cette configuration, le dispositif de lecture STB peut demander le contenu à n'importe quel débit inférieur à cette limite, par exemple 3 Mb/s.

De manière générale, en référence à la figure 3, on note « Ci@Nj » le contenu numéro i avec la qualité Nj (par exemple le j-ième niveau Nj de qualité décrit dans le fichier de description).

Le nombre de débits d'encodage disponibles par segment varie selon le dispositif de lecture utilité. Sur la figure 3, par exemple un contenu principal C1 comprend cinq débits d'encodage disponibles N1-N5.

Nous ne rentrerons pas plus dans les détails de la technique de téléchargement en adaptative streaming car sans intérêt pour l'exposé de l'invention.

Dans notre exemple, le système comprend en outre un encodeur et un générateur de fichier de description également non représentés car sans intérêt pour l'exposé de l'invention. L'encodeur a pour rôle d'encoder un contenu numérique afin d'obtenir plusieurs segments et plusieurs représentations pour chaque segment.

Le contenu encodé est transmis au générateur de fichier de description qui génère des adresses URI pour chaque segment créé.

Dans l'exemple illustré, l'encodeur et le générateur de fichier de description sont installés dans le serveur SRV.

Dans notre exemple, le dispositif de lecture STB est un terminal client et peut à ce titre entrer en communication avec le serveur de contenus SRV pour recevoir un ou plusieurs contenus (films, documentaires, séquences publicitaires, etc.).

Dans notre exemple, pour visualiser un contenu, le dispositif de lecture STB obtient une adresse du fichier de description MF d'un contenu principal (par exemple, C1) souhaité. Dans la suite, on supposera que ce fichier est un fichier de type fichier de description selon la norme MPEG-DASH et on se référera indifféremment, selon le contexte, à l'expression « fichier de description » ou « manifeste».

Une fois que le dispositif de lecture STB dispose des adresses de segments correspondant au contenu souhaité, le dispositif de lecture STB procède à l'obtention des segments via un téléchargement à ces adresses. On notera que ce téléchargement s'opère ici, traditionnellement, au travers d'une URL HTTP, mais pourrait également s'opérer au travers d'une adresse universelle (URI) décrivant un autre protocole (dvb://monsegmentdecontenu par exemple).

Lorsque le décodeur STB reçoit les segments, les segments sont ensuite restitués sur l'écran du dispositif de restitution TV.

Les contenus numériques visés sont quelconques à savoir des contenus un programme télévisuel diffusé en temps réel en Live CNTL, ou une vidéo à la demande, ou une vidéo personnelle de l'utilisateur, ou tout autre contenu multimédia équivalent.

Un contenu Live est par exemple une émission de télévision.

Le serveur de contenus SRV stocke les différents contenus sous forme de segments. Plus précisément, le serveur de contenu HAS expose une vidéo C1 sous forme de segments ou « chunks » C1i@Nj encodés à différents débits d'encodage Nj, où l'indice i désigne un identifiant temporel du « chunk » C1i@Nj comme expliqué ci-dessus.

L'entité de gestion ENT du décodeur STB est chargée de venir récupérer des segments auprès du serveur de contenu HAS en choisissant la qualité vidéo Nj en fonction de la ressource réseau disponible en l'espèce la bande passante. On ne décrit pas ici plus en détail la façon dont l'entité de gestion ENT choisit le débit d'encodage du prochain segment vidéo à télécharger.

L'entité de gestion ENT présent sur le dispositif de lecture STB commande le téléchargement d'un segment avec un débit d'encodage optimal comme décrit plus en détail par la suite.

Dans un premier temps, l'entité de gestion ENT récupère le fichier de description MNF qui correspond au contenu vidéo C1 afin de découvrir les segments disponibles du contenu vidéo C1, et les différentes qualités vidéo (ou débits d'encodage) Nj associées. Dans l'exemple de la figure 3, le contenu principal C1 est par exemple proposé sous forme de segments de durée 2s, avec un premier débit d'encodage N1 = 1Mb/s, un deuxième débit d'encodage N2 = 1.95Mb/s, un troisième débit d'encodage N3 = 3Mb/s, un quatrième débit d'encodage N3 = 5Mb/s etc.

Dans un mode de fonctionnement normal, l'entité de téléchargement opère le téléchargement par exemple, des segments successifs C11@N1 (soit le premier segment temporel à un débit d'encodage de 1Mb/s), puis C12@N2 (soit le deuxième segment temporel à un débit d'encodage de 1.95b/s), puis C13@N3 (soit le troisième segment temporel à un débit d'encodage de 3Mb/s), etc.

Selon l'invention, l'entité de gestion a également pour fonction de lire le contenu au moyen d'un lecteur. Selon l'invention, l'entité de gestion ENT dispose de plusieurs modules de lecture LCT1 et LCT2, appelés lecteurs dans la suite. Plus précisément, le dispositif de lecture, sous-entendu l'entité de gestion ENT, réalise les étapes suivantes:
a. Une étape de sélection d'un contenu ;
b. Une étape de sélection d'un lecteur parmi les lecteurs disponibles.

Les lecteurs offrent des fonctions spécifiques pour lire un contenu. Notre exemple se basera sur deux lecteurs LCT1/LCT2 afin de simplifier l'exposé de l'invention. Le nombre de lecteurs peut bien évidemment être supérieur.

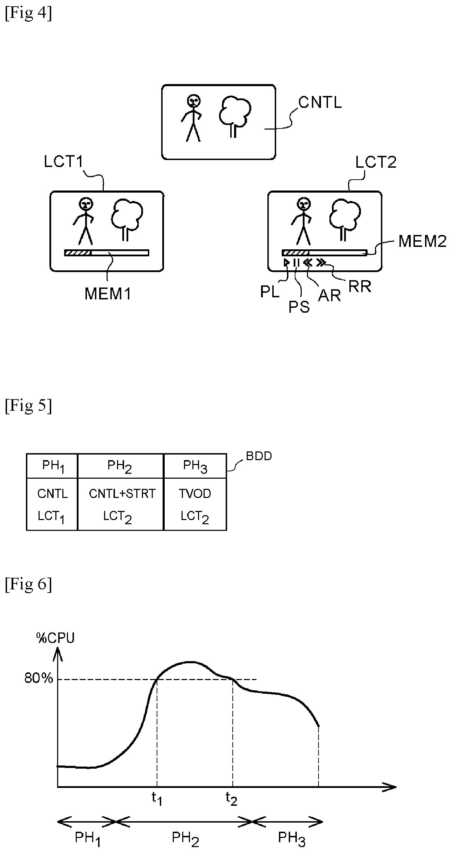

La figure 4 illustre une vue des menus MEN1/MEN2 associés aux deux lecteurs LCT1/LCT2, respectivement.

Dans notre exemple, un premier lecteur LCT1 basique offre un menu MEN 1 affichant tout simplement un axe temporel AX sur lequel apparait une première durée représentative de la durée de lecture réalisée et une deuxième durée représentative de la durée qui reste à lire jusque la fin du contenu.

Dans notre exemple, un deuxième lecteur LCT2 offre un menu MEN2 comprenant également un axe temporel AX comme pour le premier lecteur et d'autres fonctions à savoir :
- une touche PL pour démarrer la lecture si celle-ci s'est arrêtée ;
- une touche pause PS ;
- une touche avance/retour rapide AR/RR
- un affichage d'une image associé à l'instant courant de lecture.

Dans notre exemple, on part du principe que le deuxième lecteur LCT2 lorsqu'il est exécuté consomme plus de ressource processeur que le premier lecteur LCT1.

Dans notre exemple, les menus se superposent au contenu CNTL comme le montre la figure 4. Sur cette figure sont représenté
- un contenu CNTL restitué sans menu,
- et un contenu avec le premier menu MEN1, le menu étant restitué au premier plan et le contenu en arrière-plan,
- un contenu avec le deuxième menu MEN2, le menu étant aussi restitué au premier plan et le contenu en arrière-plan.

Selon l'invention, l'entité de gestion ENT gère la sélection du lecteur LCT1/LCT2 pour la lecture d'un contenu CNT. Le choix du lecteur à utiliser dépendra par exemple d'un type de contenu à lire et/ou d'un contexte d'exécution lié à la lecture d'un contenu.

Par exemple , l'entité ENT sélectionne un lecteur en fonction du type de contenu à lire ; si le contenu est un contenu Live CNTL, un lecteur minimaliste sera utilisé, ici le premier lecteur LCT1 ; par contre si le contenu est un contenu enregistré ou un contenu à la demande TVOD, le lecteur choisi comportera plus de fonction telles qu'une fonction d'avance/retour rapide, une fonction pause, une fonction affiche d'une image pour repérer l'instant de lecture courant, etc., ici le deuxième lecteur LCT2.

Un mode de réalisation est décrit en référence à la figure 5.

Lors d'une première étape, le dispositif de lecture STB requiert un accès à un contenu Live, par exemple en mode adaptative streaming de la façon indiquée ci-dessus.

Dans notre exemple, une entité ENT détermine le type de contenu et sélectionne un lecteur adapté à la lecture de ce type de contenus.

La détermination du lecteur approprié peut être réalisé en consultant une base de données BDD, décrite ci-après en référence à la figure 5 stockant des correspondances entre types de contenus et type de lecteurs à utiliser.

La figure 5 illustre plusieurs phases PH1-PH3 au cours desquelles, l'entité de sélection ENT consulte la base de données BDD pour déterminer le lecteur à sélectionner pour la lecture du contenu.

Dans notre exemple, la base de données BDD fournit les correspondances suivantes :
- Flux Live -> premier lecteur LCT1
- Flux Live CNTL + Reprise depuis le début STRT-> deuxième lecteur LCT2
- Flux télévision à la demande TVOD -> deuxième lecteur LCT2

Lors d'une première phase PH1, l'entité de gestion ENT identifie le type de contenu sélectionné CNTL. L'entité de gestion ENT consulte la base de données BDD et sélectionne le premier lecteur LCT1.

Lors d'une deuxième phase PH2 qui fait suite à la première phase PH1, l'utilisateur active la fonction de reprise depuis le début STRT ; dans ce cas, l'entité de gestion ENT sélectionne le deuxième lecteur LCT2 à la place du premier lecteur LCT1. Ce deuxième lecteur permettra ainsi de commander un retour RR ou une avance rapide AR dans le contenu ce que ne permettrait pas le premier lecteur LCT1.

Lors d'une troisième phase PH3, qui fait suite à la deuxième phase PH2, un contenu à la demande TVOD est sélectionné. L'entité de gestion ENT consulte la base de données BDD et sélectionne le lecteur correspondant à savoir le deuxième lecteur LCT2. La lecture du contenu TVOD est réalisé au moyen du deuxième lecteur LCT2.

Au cours de chaque phase, le dispositif de lecture télécharge les segments de la façon indiquée ci-dessus.

La figure 6 illustre la consommation de la ressource processeur en fonction du temps lors de chaque phase PH1-PH3.

On voit sur la courbe qu'entre deux instant t1 et t2 la charge CPU dépasse 80%.

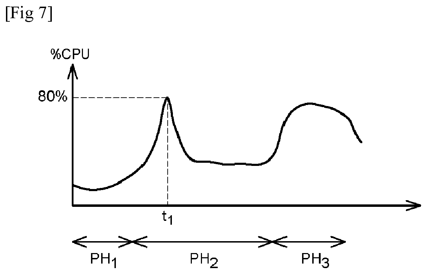

Selon un mode de réalisation, le premier lecteur LCT1, moins consommateur en charge CPU, est sélectionné automatiquement si la consommation courante en ressource processeur atteint une valeur fixée. Par exemple, en référence à la figure 7, supposons que la valeur maximum en pourcentage de la consommation en ressource processeur est fixée à 80%. Dans cette configuration, si cette valeur est atteinte, l'entité de gestion ENT sélectionne automatiquement le lecteur qui est le moins consommateur en ressource processeur, à savoir dans notre exemple le premier lecteur LCT1. Entre ces deux instants, l'entité de gestion ENT réalise donc la lecture avec le premier lecture LCT1. Ce mode montre bien que la possibilité de changer de lecteur permet de maîtriser la consommation de la ressource processeur.

Précisons enfin ici que le terme « module » ou le terme « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

## Revendications

1. Procédé de gestion de la lecture d'un contenu multimédia par un dispositif de lecture (STB) équipé d'un processeur (CPU) et apte à restituer le contenu, **caractérisé en ce que** le dispositif de lecture comprend plusieurs lecteurs disponibles à la sélection aptes à lire un même contenu, et **en ce qu'**il comprend les étapes suivantes :
a. Une étape de sélection d'un lecteur parmi les lecteurs sélectionnables (LCT1/LCT2) ;
b. Une étape de lecture du contenu avec le lecteur sélectionné.

2. Procédé de gestion selon la revendication 1, **caractérisé en ce que** la sélection se base sur un type de contenu à lire (CNTL,TVOD).

3. Procédé de gestion selon la revendication 1, **caractérisé en ce que** le lecteur est sélectionné en fonction d'un contexte d'exécution lié à la lecture du contenu.

4. Procédé de gestion selon la revendication 3, **caractérisé en ce que** le contexte d'exécution inclut un affichage d'un menu (MEN1/MEN2) en complément du contenu en cours de restitution.

5. Procédé de gestion selon la revendication 1, **caractérisé en ce que** si plusieurs lecteurs sont adaptés à la lecture du contenu, le lecteur sélectionné est sélectionné parmi les moins consommateurs en ressource processeur.

6. Procédé de gestion selon la revendication 1, **caractérisé en ce que** le contexte inclut une activation d'une fonction de lecture (STRT) au cours de la lecture d'un contenu, et **en ce que** si le lecteur courant n'est pas adapté, le procédé comprend une sélection d'un autre lecteur.

7. Procédé de gestion selon la revendication 1, **caractérisé en ce que** le contexte d'exécution est lié à la quantité d'utilisation de la ressource processeur et **en ce que** le lecteur courant est remplacé par un autre lecteur si la quantité d'utilisation de la ressource processeur atteint une valeur fixée.

8. Entité de gestion de la lecture d'un contenu multimédia par un dispositif de lecture équipé d'un processeur et apte à restituer le contenu, **caractérisé en ce que** le dispositif de lecture comprend plusieurs lecteurs disponibles à la sélection aptes à lire un même contenu, et **en ce que** le processeur réalise les étapes suivantes :
a. Une étape de sélection d'un lecteur parmi les lecteurs sélectionnables;
b. Une étape de lecture du contenu avec le lecteur sélectionné.

9. Décodeur (STB) comprenant une entité de gestion (MNG) telle que définie dans la revendication 8.

10. Programme d'ordinateur apte à être mis en œuvre sur une entité de gestion (MNG) telle que définie dans la revendication 8, le programme comprenant des instructions de code qui, lorsqu'il est exécuté par un processeur, réalise les étapes du procédé définies dans la revendication 1.

11. Support de données sur lequel a été mémorisée au moins une série d'instructions de code de programme pour l'exécution d'un procédé selon la revendication 1.
